(19) **Europäisches Patentamt / European Patent Office / Office européen des brevets**

(11) **EP 3 438 309 B1**

(12) **EUROPEAN PATENT SPECIFICATION**

(45) Date of publication and mention
of the grant of the patent:
**12.05.2021 Bulletin 2021/19**

(21) Application number: **17773875.4**

(22) Date of filing: **22.02.2017**

(51) Int Cl.:
*C22C 38/58* (2006.01)　　*C21D 9/46* (2006.01)
*C21D 6/00* (2006.01)　　*C21D 8/02* (2006.01)
*C21D 11/00* (2006.01)　　*C22C 38/02* (2006.01)
*C22C 38/04* (2006.01)　　*C22C 38/06* (2006.01)

(86) International application number:
**PCT/JP2017/006608**

(87) International publication number:
**WO 2017/169329 (05.10.2017 Gazette 2017/40)**

(54) **HIGH-STRENGTH STEEL SHEET AND METHOD FOR MANUFACTURING SAME**

HOCHFESTES STAHLBLECH UND VERFAHREN ZUR HERSTELLUNG DAVON

TÔLE D'ACIER À HAUTE RÉSISTANCE ET PROCÉDÉ POUR LA FABRICATION DE CELLE-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2016 JP 2016072740
27.12.2016 JP 2016253902**

(43) Date of publication of application:
**06.02.2019 Bulletin 2019/06**

(73) Proprietor: **Kabushiki Kaisha Kobe Seiko Sho
(Kobe Steel, Ltd.)
Kobe-shi, Hyogo 651-8585 (JP)**

(72) Inventors:
• **MURATA, Tadao**
**Hyogo 675-0137 (JP)**
• **MURAKAMI, Toshio**
**Nishi-ku, Kobe-shi**
**Hyogo 651-2271 (JP)**
• **KAKIUCHI, Elijah**
**Nishi-ku, Kobe-shi,**
**Hyogo 651-2271 (JP)**
• **OTANI, Shigeo**
**Nishi-ku, Kobe-shi,**
**Hyogo 651-2271 (JP)**
• **FUTAMURA, Yuichi**
**Nagoya-shi, Aichi 451-0045 (JP)**

(74) Representative: **Müller-Boré & Partner
Patentanwälte PartG mbB
Friedenheimer Brücke 21
80639 München (DE)**

(56) References cited:
| | |
|---|---|
| EP-A1- 2 910 662 | WO-A1-2012/067159 |
| WO-A1-2012/118081 | WO-A1-2014/092025 |
| WO-A1-2014/092025 | WO-A1-2016/021196 |
| WO-A1-2016/021197 | WO-A1-2016/021197 |
| JP-A- 2008 291 304 | US-A1- 2012 312 433 |

EP 3 438 309 B1

**Description**

TECHNICAL FIELD

The present disclosure relates to a high-strength steel sheet usable for various applications including an automotive component, and a method for manufacturing the high-strength steel sheet.

BACKGROUND ART

A steel sheet provided for manufacturing steel components such as a component for vehicles is required to be reduced in thickness to realize improvement of fuel efficiency, and high strengthening of the steel sheet is required to achieve the reduction in thickness and securement of strength of the components. Patent Documents 1 and 2 disclose as the high-strength steel sheet steel sheets having a tensile strength of 980 to 1180 MPa and exibiting good deep drawability, respectively workability and cold brittleness resistance.

PRIOR ART DOCUMENT

PATENT DOCUMENT

Patent Document 1: JP 2009 203548 A Patent Document 2: US2012/312433

SUMMARY OF THE INVENTION

PROBLEMS TO BE SOLVED BY THE INVENTION

The steel sheet, however, is required to have not only high tensile strength and excellent deep drawability but also further excellent strength-ductility balance, high yield ratio and excellent hole expandability, i.e., a high hole expansion ratio when it is used for steel components for various application including a component for vehicles.

Specifically, each of the tensile strength, the strength-ductility balance, the yield ratio, the deep drawability, and the hole expansion ratio is required to attain a following level. First, the tensile strength is required to be 780 MPa or more. Further, the steel sheet needs to have high yield strength (YS) in addition to high tensile strength (TS) in order to increase stress that can be applied to a component during usage. Further, from a viewpoint of securing collision safety and the like, it is necessary to increase the yield strength of the steel sheet. Thus, a yield ratio (YR = YS/TS) of 0.60 or more is required specifically.

As to the strength-ductility balance, a product of TS and total elongation EL, TS $\times$ EL is required to be 22000 MPa% or more. Furthermore, for securement of formability during forming a component, an LDR (Limiting Drawing Ratio) is required to be 2.05 or more, which is an index that indicates the deep drawability and is derived by a method in Examples described later, and the hole expansion ratio $\lambda$ indicating the hole expandability is also required to be 20% or more.

The high-strength steel sheet disclosed in Patent Document 1, however, has difficulty satisfying all these requirements, and a high-strength steel sheet has been demanded that is capable of satisfying all these requirements.

Embodiments of the present invention have been made to meet these requirements, and an object of the embodiments is to provide a high-strength steel sheet that attains a high level in any of the tensile strength TS, the yield ratio YR, the product of TS and total elongation EL, TS $\times$ EL, the LDR indicating the deep drawability, and the hole expansion ratio $\lambda$ indicating the hole expandability, and a method for manufacturing the high-strength steel sheet.

MEANS FOR SOLVING THE PROBLEMS

A high-strength steel sheet and a method of manufacturing a high-strength steel according to the embodiment of the present invention, are disclosed in the appended claims.

EFFECTS OF INVENTION

According to the embodiment of the present invention, it is possible to provide a high-strength steel sheet that attains a high level in any of the tensile strength TS, the yield ratio YR, the product of TS and total elongation EL, TS $\times$ EL, the hole expandability, and the deep drawability, and a method for manufacturing the high-strength steel sheet.

BRIEF DESCRIPTION OF THE DRAWING

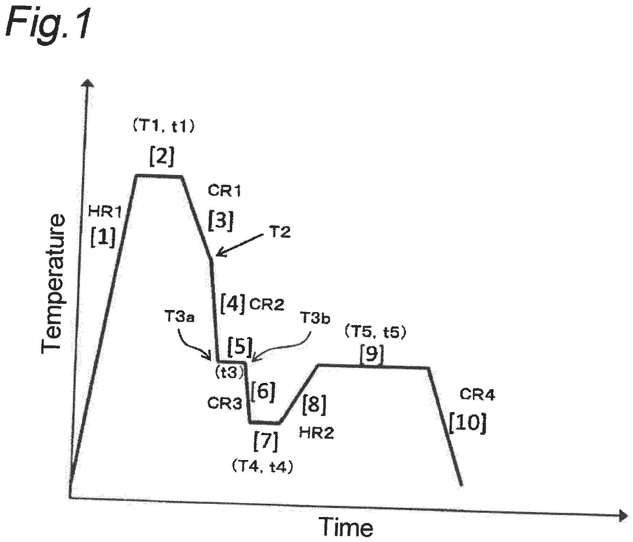

Fig. 1 shows a diagram schematically illustrating a heat treatment of a manufacturing method according to an embodiment of the present invention.

MODE FOR CARRYING OUT THE INVENTION

As a result of earnest studies, the prevent inventors have found that it is possible to obtain a high-strength steel sheet that attains a high level in any of the tensile strength TS, the yield ratio YR, the product of TS and total elongation EL, TS × EL, the hole expandability, and the deep drawability when the steel sheet has predetermined components and a steel structure. In particular, the present inventors have found that it is possible to achieve especially excellent deep drawability by suppressing an average particle diameter of retained austenite to a certain size or smaller while securing a certain ratio or more of relatively large retained austenite in the steel structure, and further that especially a multi-step austempering treatment is to be performed in a manufacturing step in order to obtain this steel structure. Thus, the embodiments of the present invention have been completed. First, the steel structure is described below.

1. Steel structure

Hereinafter, the high-strength steel sheet according to the embodiments of the present invention is described in detail in terms of steel structure. In the description of the steel structure below, mechanisms are sometimes described due to which such structure is capable of improving various characteristics. These mechanisms have been devised on the basis of findings having been obtained by the present inventors until now, and it is to be noted that these mechanisms are not to limit a technical scope of the present invention.

[Ferrite: more than 5 area% and 50 area% or less]

Ferrite is generally excellent in ductility but has a problem of being low in strength. In the embodiments of the present invention, an amount of ferrite is set to more than 5 area% in order to improve the ductility and obtain excellent strength-ductility balance. The amount of ferrite is preferably 7 area% or more, more preferably 10 area% or more. On the other hand, an excess amount of ferrite decreases the hole expandability and/or the yield ratio. Therefore, the amount of ferrite is set to 50 area% or less in order to secure an excellent hole expansion ratio λ and a high yield ratio. The amount of ferrite is preferably 45 area% or less, more preferably 40 area% or less.

[Total of tempered martensite and bainite: 30 area% or more]

Total of tempered martensite and bainite is set to 30 area% or more in the whole structure to be capable of attaining both high strength and high hole expandability. Bainite in the embodiments of the present invention refers to tempered bainite, untempered bainite and bainitic ferrite. The total of tempered martensite and bainite is preferably 35 area% or more. An upper limit of the total of tempered martensite and bainite is about 85 area%, in view of fractions of ferrite and retained austenite as other essential structures.

[Retained austenite: 10 volume% or more]

Retained austenite causes, during processing such as press working, TRIP phenomenon where retained austenite transforms into martensite due to strain-induced transformation and is a structure capable of giving large elongation. Formed martensite has high hardness. Therefore, it is possible to obtain excellent strength-ductility balance. Further, it is also possible to increase the deep drawability by controlling a particle diameter distribution of retained austenite as described later. An amount of retained austenite is set to 10 volume% or more in order to obtain excellent strength-ductility balance especially with a TS × EL of 22000 MPa% or more and sufficiently produce an effect of improving the deep drawability by controlling a particle diameter distribution of retained austenite described later. The amount of retained austenite is preferably 12 volume% or more, more preferably 13 volume% or more, further preferably 14 volume% or more, still further preferably 15 volume% or more. An upper limit of the amount of retained austenite is around 40 volume%, in view of the component composition and the manufacturing conditions that are defined in the embodiments of the present invention, and the like.

In the high-strength steel sheet according to the embodiments of the present invention, much of retained austenite exists in a form of an MA. The MA is an abbreviation of a martensite-austenite constituent and a composite structure of martensite and austenite.

[Average circle equivalent diameter of MA: 1.0 μm or less]

The MA is a hard phase, and a vicinity of an interface between a parent phase and the hard phase serves as a void formation site during deformation. The MA having a coarser size more causes concentration of strain in the interface between the parent phase and the hard phase to easily generate fracture from the void, as a base point, formed in the vicinity of the interface between the parent phase and the hard phase. This results in a decrease of the hole expandability. Therefore, an average circle equivalent diameter of the MA is suppressed to 1.0 μm or less. The average circle equivalent diameter of the MA is preferably 0.8 μm or less, more preferably 0.7 μm or less. The average circle equivalent diameter of the MA is preferably smaller to increase the hole expandability. In view of the component composition and the manufacturing conditions that are defined in the embodiments of the present invention, however, a lower limit of the average circle equivalent diameter of the MA is around 0.2 μm.

In the embodiments of the present invention, an area proportion of the MA is not especially limited, and an area proportion of retained austenite is set to the above range as described above. As described above, the amount of retained austenite is 10 volume% or more in the embodiments of the present invention, so that the MA where much of retained austenite exists may also exist by 10 area% or more. In the embodiments of the present invention, it is necessary to secure desired area proportions of ferrite, and tempered martensite and bainite, so that an upper limit of the area proportion of the MA is less than 65 area%.

[Average circle equivalent diameter of retained austenite: 1.0 μm or less]

[Ratio of retained austenite with circle equivalent diameter of 1.5 μm or more to whole retained austenite: 5% or more]

In the embodiments of the present invention, as described above, the present inventors have found that it is possible to achieve especially excellent deep drawability by suppressing an average particle diameter of retained austenite to a certain size or smaller while securing a certain ratio or more of relatively large retained austenite. Hereinafter, reasons for this definition are described in detail.

When flow stress in a flange portion of a steel component formed during deep drawing is smaller than tensile stress in a longitudinal wall of the steel component, drawing easily proceeds to give good deep drawability. The flange portion is, in its deformation behavior, deformed while subjected to compressive stress due to strong compressive stress along a circumference of a board surface. On the other hand, martensite transformation is accompanied by volume expansion, so that the martensite transformation is less likely to occur under compressive stress. As described above, strain-induced martensite transformation of retained austenite is suppressed in the flange portion, so that work hardening is small, as a result, the deep drawability is improved. Existence of coarse retained austenite increases an amount of volume expansion during martensite transformation. In other words, martensite transformation is more suppressed under compressive stress, so that the deep drawability is considered to be more improved.

On the other hand, it is necessary to maintain a high work hardening rate during deformation in order to increase the tensile stress in the longitudinal wall portion for obtaining good deep drawability. The present inventors have found that in order to maintain a high work hardening rate during deformation as described above, it is effective to cause strain-induced transformation over a wide stress range. Thus, the present inventors have focused on mixing unstable retained austenite that easily undergoes strain-induced transformation under relatively low stress, with stable retained austenite that undergoes strain-induced transformation only under high stress.

From these viewpoints, the present inventors have studied to obtain steel structures including at predetermined amounts: relatively coarse retained austenite as the unstable retained austenite that contributes to suppressing martensite transformation in the flange protion and easily undergoes strain-induced transformation under relatively low stress in the longitudinal wall protion; and fine retained austenite as the stable retained austenite that undergoes strain-induced transformation only under high stress in the longitudinal wall portion.

Then, the present inventors have found that it is possible to maintain a high work hardening rate during deformation and thus exhibit excellent deep drawability by setting an average circle equivalent diameter of retained austenite to 1.0 μm or less and setting a volume ratio of retained austenite with a circle equivalent diameter of 1.5 μm or more to the whole retained austenite to 5% or more. In the embodiments of the present invention, "retained austenite with a circle equivalent diameter of 1.5 μm or more" is sometimes referred to as "relatively coarse retained austenite."

The average circle equivalent diameter of retained austenite is preferably 0.95 μm or less, more preferably 0.90 μm or less. A lower limit of the average circle equivalent diameter of retained austenite is around 0.40 μm, in view of the component composition and the manufacturing conditions that are defined in the embodiments of the present invention.

The volume ratio of retained austenite with a circle equivalent diameter of 1.5 μm or more to the whole retained austenite is preferably 10% or more, more preferably 15% or more. When the ratio of relatively coarse retained austenite is excessively large, the size of the MA is easily coarsened to easily decrease the hole expandability. From this viewpoint, the volume ratio of retained austenite with a circle equivalent diameter of 1.5 μm or more is preferably 50% or less, more preferably 40% or less.

As described above, it is possible to obtain large elongation when retained austenite undergoes strain-induced transformation to cause the TRIP phenomenon. On the other hand, martensite structure formed by the strain-induced transformation is hard and actions as an origin of fracture. A larger martensite structure is more likely to be the origin of fracture. By setting the average circle equivalent diameter of retained austenite to 1.0 μm or less as described above, however, it is possible to reduce the size of martensite formed by the strain-induced transformation and thus suppress fracture.

The average circle equivalent diameter of retained austenite, and the volume ratio of retained austenite with a circle equivalent diameter of 1.5 μm or more to the whole retained austenite can be derived, as indicated in Examples described later, by preparing a phase map, using an EBSD (Electron Back Scatter Diffraction patterns) method, as a crystal analysis method with use of an SEM (Scanning Electron Microscope).

The metallographic structure of the steel sheet according to the embodiments of the present invention include, as described above, ferrite, tempered martensite, bainite, retained austenite, and the MA. The metallographic structure may be composed of only these structures but may also include a balance structure such as perlite within a scope that does not impair the effects of the present invention.

2. Component composition

Hereinafter, the high-strength steel sheet according to the embodiments of the present invention is described in terms of composition. All the unit expression % in component composition means mass%.

[C: 0.15~0.35%]

C is an essential element for obtaining a desired structure such as retained austenite to secure high characteristics such as $TS \times EL$. In order to effectively produce such an action, an amount of C is set to 0.15% or more. The amount of C is preferably 0.17% or more, more preferably 0.20% or more. On the other hand, when the amount of C is more than 0.35%, the MA and retained austenite become coarse, as a result, both the deep drawability and the hole expandability decrease. Further, when the amount of C is excessively large, the steel sheet is also inferior in weldability. Therefore, the amount of C is set to 0.35% or less. The amount of C is preferably 0.33% or less, more preferably 0.30% or less.

[Total of Si and Al: 0.5 to 2.5%]

Si and Al respectively serve to suppress precipitation of cementite and promote formation of retained austenite. In order to effectively produce such an action, Si and Al are contained in an amount of 0.5% or more in total. The total of Si and Al is preferably 0.7% or more, more preferably 1.0% or more. On the other hand, when the total of Si and Al is more than 2.5%, tempered martensite and bainite cannot be secured and the MA and retained austenite become coarse. Therefore, the total of Si and Al is set to 2.5% or less, preferably 2.0% or less.

Among Si and Al, Al may be contained in an addition amount that is the degree to which Al functions as a deoxidation element, that is, less than 0.10%. Alternatively, for a purpose of, for example, suppressing formation of cementite and increasing the amount of retained austenite, Al may be contained in a much amount, for example, in an amount of 0.7% or more.

[Mn: 1.0~4.0%]

Mn is a necessary element to suppress formation of ferrite and secure tempered martensite/bainite and the like other than ferrite. In order to effectively produce such an action, an amount of Mn is set to 1.0% or more. The amount of Mn is preferably 1.5% or more, more preferably 2.0% or more. When the amount of Mn is more than 4.0%, however, bainite transformation is suppressed in a manufacturing process and the relatively coarse retained austenite described above cannot be obtained sufficiently, as a result, excellent deep drawability cannot be secured. Therefore, the amount of Mn is set to 4.0% or less, preferably 3.7% or less, more preferably 3.5% or less.

[P: more than 0% and 0.05% or less]

P inevitably exists as an impurity element. When an amount of P is more than 0.05%, the total elongation EL and the hole expandability are degraded. Therefore, the amount of P is set to 0.05% or less, preferably 0.03% or less.

[S: more than 0% and 0.01% or less]

S inevitably exists as an impurity element. When an amount of S is more than 0.01%, a sulfide-based inclusion such as MnS is formed that functions as an origin of breaking to decrease the hole expandability. Therefore, the amount of S is 0.01% or less, preferably 0.005% or less.

In one preferable embodiment, the balance of the component composition of the high-strength steel sheet is Fe and inevitable impurities. As the inevitable impurities, trace elements such as, As, Sb and Sn are allowed to be incorporated, the trace elements being brought in depending on a situation such as a raw material, a material or manufacturing facilities. As in cases of P and S, for example, there is an element whose content is usually preferably smaller and thus that is an inevitable impurity but whose composition range is separately defined as described above. Therefore, in the present specification, the "inevitable impurities" that constitute the balance are a concept other than an element whose composition range is separately defined.

The high-strength steel sheet according to the embodiments of the present invention may further contain any other element as long as the steel sheet can retain the characteristics. Exemplified below are other elements that are experimentally considered to be selectively contained without impairing the effects of the present invention.

[(a) At least one selected from group consisting of Cu, Ni, Mo, Cr and B: more than 0% and 1.0% or less in total]

Cu, Ni, Mo, Cr and B serve as elements that increase the tensile strength of the steel sheet, and are elements that stabilize retained austenite and effectively action to secure a predetermined amount of retained austenite. In order to effectively produce such effects, the elements are contained in a total amount of preferably 0.001% or more, more preferably 0.01% or more. When the elements are excessively contained, however, the effects of the elements are saturated to cause economical waste, so that the total amount of the elements is preferably 1.0% or less, more preferably 0.5% or less. The elements can be contained alone or in combination of any two or more elements selected.

[(b) At least one selected from group consisting of V, Nb, Ti, Zr and Hf: more than 0% and 0.2% or less in total]

V, Nb, Ti, Zr and Hf are elements for manufacturing effects of precipitation strengthening and refining a structure and usefully action for high strengthening of the steel sheet. In order to effectively produce such effects, the elements are contained in a total amount of preferably 0.01% or more, more preferably 0.02% or more. When the elements are excessively contained, however, the effects of the elements are saturated to cause economical waste, so that the total amount of the elements is preferably 0.2% or less, more preferably 0.1% or less. The elements can be contained alone or in combination of any two or more elements selected.

[(c) At least one selected from group consisting of Ca, Mg and REM: more than 0% and 0.01% or less in total]

Ca, Mg and REM are elements that control a form of a sulfide in steel and effectively action to improve processability. In order to effectively produce such effects, the elements are contained in a total amount of preferably 0.001% or more, more preferably 0.002% or more. When the elements are excessively contained, however, the effects of the elements are saturated to cause economical waste, so that the total amount of the elements is preferably 0.01% or less and is further preferably set to 0.005% or less. The elements can be contained alone or in combination of any two or more elements selected. Examples of the REM include Sc, Y, lanthanoids and the like.

3. Characteristics

As described above, the high-strength steel sheet according to the embodiments of the present invention attains a high level in any of the TS, the YR, the TS × EL, the λ and the LDR. Hereinafter, the high-strength steel sheet according to the embodiments of the present invention is described in detail in terms of these characteristics.

(1) Tensile strength TS

The high-strength steel sheet according to the embodiments of the present invention has a tensile strength of 780 MPa or more. The high-strength steel sheet has a tensile strength of preferably 880 MPa or more, more preferably 980 MPa or more. The strength is preferably higher, but an upper limit of the tensile strength is around 1300 MPa, in view of the component composition, the manufacturing conditions and the like of the steel sheet according to the embodiments of the present invention.

(2) Yield ratio YR

The high-strength steel sheet according to the embodiments of the present invention has a yield ratio of 0.60 or more. Such a yield ratio together with the high tensile strength described above can realize high yield strength. As a result, a final product obtained by processing such as deep drawing is usable without deformation even if a high load is applied to it. The high-strength steel sheet preferably has a yield ratio of 0.65 or more. The yield ratio is preferably higher, but an upper limit of the yield ratio is around 0.75, in view of the component composition, the manufacturing conditions and the like of the steel sheet according to the embodiments of the present invention.

(3) Product of tensile strength TS and total elongation EL, TS × EL

The high-strength steel sheet according to the embodiments of the present invention has a TS × EL of 22000 MPa% or more. The high-strength steel sheet having a TS × EL of 22000 MPa% or more is capable of simultaneously having high strength and high ductility, attaining a high level of strength-ductility balance. The TS × EL is preferably 23000 MPa or more. The TS × EL is preferably higher, but an upper limit of the TS × EL is around 35000 MPa%, in view of the component composition, the manufacturing conditions and the like of the steel sheet according to the embodiments of the present invention.

(4) Hole expansion ratio λ

The high-strength steel sheet according to the embodiments of the present invention has a hole expansion ratio λ of 20% or more. This can give excellent processability such as press formability. The high-strength steel sheet preferably has a hole expansion ratio λ of 30% or more. The hole expansion ratio λ is preferably higher, but an upper limit of the hole expansion ratio λ is around 60%, in view of the component composition, the manufacturing conditions and the like of the steel sheet according to the embodiments of the present invention.

(5) Deep drawability

In the embodiments of the present invention, the deep drawability of the steel sheet is evaluated by the LDR as indicated in Examples described later. The high-strength steel sheet according to the embodiments of the present invention has an LDR of 2.05 or more, preferably 2.10 or more and thus has excellent deep drawability. The LDR is preferably higher, but an upper limit of the LDR is around 2.25, in view of the component composition, the manufacturing conditions and the like of the steel sheet according to the embodiments of the present invention.

The high-strength steel sheet according to the embodiments of the present invention is excellent in any of the TS, the YR, the TS × EL, the λ, and the LDR, so that the high-strength steel sheet is capable of being suitably used for steel-formed components for various application including a component for vehicles.

4. Manufacturing method

Next, a method for manufacturing the high-strength steel sheet according to the embodiments of the present invention is described. The present inventors have found that the high-strength steel sheet is obtained that has the desired steel structure described above and thus has the desired characteristics described above, by performing, on an original sheet having the predetermined composition, a heating treatment including steps A to E described in detail below, especially, a multi-step austempering treatment. Hereinafter, details are described.

As the original sheet on which the heat treatment is performed, there can be exemplified a hot-rolled steel sheet that has undergone hot rolling and a cold-rolled steel sheet that has further undergone cold rolling. Conditions of the hot rolling and the cold rolling are not especially limited.

The heat treatment performed on the original sheet is described with reference to Fig. 1 schematically illustrating the heat treatment.

[Step A: step of heating to temperature T1 of ($Ac_1$ point × 0.8 + $Ac_3$ point × 0.2) or higher and lower than $Ac_3$ point]

The step A corresponds to [2] in Fig. 1. As illustrated by [2] in Fig. 1, heating is performed to a temperature T1 of ($Ac_1$ point × 0.8 + $Ac_3$ point × 0.2) or higher and lower than $Ac_3$ point. When the heating temperature T1 is lower than ($Ac_1$ point × 0.8 + $Ac_3$ point × 0.2), reverse transformation into austenite is insufficient to allow a processed structure to remain, so that it is impossible to secure a certain amount of ferrite and thus the strength-ductility balance is decreased. Therefore, the heating temperature T1 is set to ($Ac_1$ point × 0.8 + $Ac_3$ point × 0.2) or higher, preferably ($Ac_1$ point × 0.8 + $Ac_3$ point × 0.2) + 5°C or higher, more preferably ($Ac_1$ point × 0.8 + $Ac_3$ point × 0.2) + 10°C or higher. When the heating temperature T1 is $Ac_3$ point or higher, however, it is impossible to secure a desired amount of ferrite and thus the ductility is degraded. Therefore, the heating temperature T1 is set to lower than $Ac_3$ point. The heating temperature T1 is preferably $Ac_3$ point - 10°C or lower, more preferably $Ac_3$ point - 20°C or lower.

A retention time t1 in the heating temperature T1 is preferably 1 to 1800 seconds, in view of securement of the effects by the heating, productivity and the like.

The $Ac_1$ and $Ac_3$ points are derived from following formulae (1) and (2) respectively that are described in "The Physical Metallurgy of Steels" by Leslie (published from Maruzen Co., Ltd., May 31, 1985, p. 273). In either of the formulae, each of the elements in the formula represents a content by mass% of the element in a steel sheet, and calculation is performed with an element that is not contained set as zero.

$$Ac_1 \text{ point} = 723 - 10.7Mn + 29.1Si + 16.9Cr...(1)$$

$$Ac_3 \text{ point} = 910 - 203C^{0.5} + 44.7Si + 104V + 31.5Mo - 30Mn - 11Cr +$$

$$700P + 400Al + 400Ti...(2)$$

In a temperature rising stage illustrated by [1] in Fig. 1, the temperature may be raised at arbitrary heating rate. For example, the temperature is raised from room temperature to the heating temperature T1 at an average heating rate HR1 of 1°C/s or more and 20°C/s or less.

[Step B: step of cooling after heating, from rapid cooling start temperature T2 of 650°C or higher to cooling stop temperature T3a of 300 to 500°C at average cooling rate of 30°C/s or more and less than 200°C/s]

The step B corresponds to [4] in Fig. 1. As illustrated by [4] in Fig. 1, rapid cooling is performed between a rapid cooling start temperature T2 of 650°C or higher and a cooling stop temperature T3a of 300 to 500°C at an average cooling rate CR2 of 30°C/s or more, thereby formation of excessive ferrite can be supressed. The average cooling rate CR2 is preferably 35°C/s or more, more preferably 40°C/s or more. When the average cooling rate CR2 is too high, however, excessive thermal strain is likely to be generated by sharp cooling, and thus the average cooling rate CR2 is set to less than 200°C/s, preferably 100°C/s or less.

The rapid cooling at an average cooling rate CR2 of 30°C/s or more is started from the rapid cooling start temperature T2 of 650°C or higher. When the rapid cooling start temperature T2 is lower than 650°C, excessive growth of ferrite occurs before the start of the rapid cooling to cause an inconvenience such as being unable to secure a desired amount of ferrite. The rapid cooling start temperature T2 is preferably 680°C or higher, more preferably 700°C or higher. An upper limit of the rapid cooling start temperature T2 is not especially limited and may be the heating temperature T1 or lower.

The cooling stop temperature T3a of 300 to 500°C is rapid cooling finish temperature at which the rapid cooling is finished and is also start temperature of gradual cooling in the step C described below. When the temperature T3a is higher than 500°C, that is, if the rapid cooling is stopped in a high temperature range, a carbon-condensed region excessively increases to coarsen not only retained austenite but also the MA, and thus the hole expansion ratio is decreased. The temperature T3a is preferably 480°C or lower, more preferably 460°C or lower. On the other hand, when the temperature T3a is lower than 300°C, that is, if the rapid cooling is performed to a low temperature range, the carbon-condensed region decreases to result in being unable to secure relatively coarse retained austenite with a circle equivalent diameter of 1.5 $\mu$m or more, and thus the deep drawability is decreased. The temperature T3a is preferably 320°C or higher, more preferably 340°C or higher.

In the embodiments of the present invention, an average cooling rate CR1 is not especially limited, which is employed in a temperature decrease from the heating temperature T1 to 650°C illustrated by [3] in Fig. 1. As the average cooling rate CR1, there can be exemplified cooling at a relatively low average cooling rate of 0.1°C/s or more and 10°C/s or less.

[Step C: step of performing gradual cooling after rapid cooling, in temperature range from 300 to 500°C at average cooling rate of 0°C/s or more and 10°C/s or less for 10 seconds or more and less than 300 seconds after rapid cooling]

The step C corresponds to [5] in Fig. 1. As illustrated by [5] in Fig. 1, a temperature range from a gradual cooling start temperature, i.e., the rapid cooling finish temperature T3a to a gradual cooling finish temperature T3b illustrated in Fig. 1 is 300 to 500°C. An average cooling rate from the T3a to the T3b is set to 0°C/s or more and 10°C/s or less, and a time from the T3a to the T3b, that is, a gradual cooling time t3 is set to 10 seconds or more and less than 300 seconds. These conditions allow partial formation of bainite. Bainite has a lower solid solubility limit of carbon than a solid solubility limit of austenite, so that carbon exceeding the solid solubility limit is discharged. This results in forming a region of austenite where carbon is condensed around bainite. This region undergoes cooling in the step D and reheating in the step E that are described later to become relatively coarse retained austenite. Existence of this relatively coarse retained austenite enables an increase of the deep drawability as described above.

Described below are reasons for setting the temperature range of the gradual cooling to 300 to 500°C. That is, when the gradual cooling start temperature T3a is higher than 500°C, as described above, the carbon-condensed region becomes excessively large to coarsen not only retained austenite but also the MA, and thus the hole expansion ratio is decreased. The temperature T3a is preferably 480°C or lower, more preferably 460°C or lower. On the other hand, when the gradual cooling finish temperature T3b is lower than 300°C, the carbon-condensed region is refined due to progress of bainite transformation at low temperature to be unable to sufficiently secure relatively coarse retained austenite, and thus the deep drawability is decreased. The temperature T3b is preferably 320°C or higher, more preferably 340°C or higher.

When the gradual cooling time t3 is less than 10 seconds, the area of the carbon-condensed region decreases and the amount of retained austenite with a circle equivalent diameter of 1.5 $\mu$m or more becomes insufficient, and thus the deep drawability is decreased. Therefore, the gradual cooling time t3 is set to 10 seconds or more, preferably 30 seconds or more, more preferably 50 seconds or more. On the other hand, when the gradual cooling time t3 is 300 seconds or more, the carbon-condensed region becomes excessively large to coarsen not only retained austenite but also the MA, and thus the hole expansion ratio is decreased. Therefore, the gradual cooling time t3 is set to less than 300 seconds, preferably 200 seconds or less, more preferably 100 seconds or less, further preferably 80 seconds or less, still further preferably 60 seconds or less.

When the average cooling rate of the gradual cooling is more than 10°C/s, sufficient bainite transformation does not occur, as a result, sufficient carbon-condensed region does not form and thus the amount of relatively coarse retained austenite becomes insufficient. The average cooling rate is preferably 8°C/s or less, more preferably 3°C/s or less. Retaining at an average cooling rate of 0°C/s, that is, at constant temperature may be performed. Alternatively, the cooling rate may be changed within the above range in the above temperature range, or the gradual cooling may be combined with the retaining at constant temperature.

As preferable conditions of the gradual cooling, there can be exemplified gradual cooling in a temperature range from 320 to 480°C at an average cooling rate of 0°C/s or more and 8°C/s or less for 30 to 80 seconds. More preferably, the gradual cooling is performed in a temperature range from 340 to 460°C at an average cooling rate of 0°C/s or more and 3°C/s or less for 50 to 60 seconds.

In Patent Document 1 described above, it is considered that the gradual cooling is not performed but reheating after excessive cooling is carried out. As a result, in Patent Document 1, it is considered that the amount of relatively coarse retained austenite, that is, the ratio of retained austenite with a circle equivalent diameter of 1.5 $\mu$m or more is low and thus deep drawability is inferior to that of the steel sheet of the present invention.

[Step D: step of cooling after gradual heating, from gradual cooling finish temperature T3b of 300°C or higher to cooling stop temperature T4 of 100 to 300°C at average cooling rate of more than 10°C/s]

The step D corresponds to [6] in Fig. 1. As illustrated by [6] in Fig. 1, cooling is performed from the gradual cooling finish temperature T3b of 300°C or higher to a cooling stop temperature T4 of 100 to 300°C at an average cooling rate CR3 of more than 10°C/s to allow a part of the carbon-condensed region to undergo martensite transformation. This enables refining of the remaining carbon-condensed region that has not undergone martensite transformation, and thus fine MA is obtained. When the average cooling rate CR3 is 10°C/s or less, the carbon-condensed region outspreads more than necessary during the cooling to coarsen the MA, and thus the hole expansion ratio is decreased. The average cooling rate CR3 is preferably 15°C/s or more, more preferably 20°C/s or more. The gradual cooling finish temperature T3b is 500°C or lower as described in the step C.

The stop temperature T4 of the cooling at the average cooling rate CR3 is controlled in a temperature range from 100 to 300°C to adjust an amount of remaining austenite that does not undergo martensite transformation and thus control an amount of a final amount of retained austenite. When the cooling stop temperature T4 is lower than 100°C, the amount of retained austenite becomes short. This results in an increase of the TS but a decrease of the EL to make the TS × EL balance insufficient. The cooling stop temperature T4 is preferably 120°C or higher, more preferably 140°C or higher. On the other hand, when the cooling stop temperature T4 is higher than 300°C, coarse untransformed austenite increases and remains even after following cooling, and eventually the size of the MA is coarsened and thus the hole expansion ratio $\lambda$ is decreased. Therefore, the cooling stop temperature T4 is set to 300°C or lower. The cooling stop temperature T4 is preferably 280°C or lower, more preferably 260°C or lower. In one preferable embodiment, the gradual cooling finish temperature T3b is set to a cooling start temperature as illustrated by [6] in Fig. 1.

After the cooling at the average cooling rate CR3, retaining at the cooling stop temperature T4 may be performed as illustrated by [7] in Fig. 1 or reheating treatment described later may be performed without the retaining. When the retaining is performed at the cooling stop temperature T4, a retention time t4 is preferably set to 1 to 600 seconds. This is because the retention time t4 hardly affects the characteristics even when being long, but decreases productivity when being more than 600 seconds.

[Step E: step of reheating to reheating temperature T5 of 300 to 500°C]

The step E corresponds to [9] in Fig. 1. As illustrated by [9] in Fig. 1, reheating to a reheating temperature T5 of 300 to 500°C is performed and retaining is performed at the reheating temperature T5 to discharge carbon in martensite and thus promote condensation of carbon in austenite around martensite, and austenite can be stabilized. This enables an increase in the amount of retained austenite eventually obtained.

When the reheating temperature T5 is lower than 300°C, diffusion of carbon becomes insufficient to give no sufficient amount of retained austenite and thus the TS × EL is decreased, and to give no effect of improving the deep drawability by control of a particle diameter distribution of retained austenite. Therefore, the reheating temperature T5 is set to 300°C or higher, preferably 320°C or higher, more preferably 340°C or higher. On the other hand, when the reheating temperature T5 is higher than 500°C, carbon is precipitated as cementite to give no sufficient amount of retained austenite. As described above, such shortage of retained austenite decreases the TS × EL and gives no effect of improving the deep drawability by control of a particle diameter distribution of retained austenite. Therefore, the reheating temperature T5 is set to 500°C or lower, preferably 480°C or lower, more preferably 460°C or lower.

A reheating time t5 during retaining at the reheating temperature T5 is not especially limited and is, for example, 50 seconds or more, further 70 seconds or more, further 90 seconds or more. An upper limit of the reheating time t5 is, for example, 1200 seconds or less, further 900 seconds or less, further 600 seconds or less.

An average heating rate HR2 is not especially limited in a temperature rising step illustrated by [8] in Fig. 1 from the cooling stop temperature T4 to the reheating temperature T5. Cooling illustrated by [10] in Fig. 1 after the reheating may be preferably performed to 200°C or lower, for example, room temperature at an average cooling rate CR4 of 2 to 20°C/s.

EXAMPLES

Hereinafter, the embodiments of the present invention will be more specifically described with reference to examples. The present invention is not limited by the following examples, and can be carried out by adding a modification thereto within a range that is suitable for the gist described above and below, and any modifications are included in the technical range of the present invention.

1. Preparation of sample

A casting material having component composition (with the balance being iron and inevitable impurities) described in Table 1 was produced by vacuum melting and then subjected to hot forging to form a sheet with a sheet thickness of 30 mm, followed by hot rolling. Table 1 also shows values of the Ac$_1$ and Ac$_3$ points and "0.8 × Ac$_1$ point + 0.2 × Ac$_3$ point" that were calculated from the component composition. In the hot rolling, the sheet that had been heated to 1200°C was subjected to multistage rolling to have a sheet thickness of 2.5 mm. At this time, hot rolling finish temperature was set to 880°C. Then, the sheet was cooled to 600°C at 30°C/s, inserted into a furnace heated to 600°C after the cooling was stopped, retained for 30 minutes, and then furnace cooled to give a hot-rolled steel sheet. The hot-rolled steel sheet was subjected to acid pickling to remove scale on a surface of the steel sheet and subjected to cold rolling to give a 1.4 mm cold-rolled steel sheet as an original sheet. This original pate was subjected to a heat treatment under conditions indicated in Tables 2-1 and 2-2 to give a sample. In the present examples except No. 17, the average heating rate HR2 was set to 30°C/s in the temperature rising step from the cooling stop temperature T4 to the reheating temperature T5.

The samples obtained were evaluated for a steel structure and characteristics as described below.

[Table 1]

| Steel code | Component composition (mass%), balance being iron and inevitable impurities | | | | | | | Ac$_1$ | Ac$_3$ | 0.8Ac$_1$+0.2Ac$_3$ |
| | C | Si | Mn | P | S | Al | Si+Al | (°C) | (°C) | (°C) |
|---|---|---|---|---|---|---|---|---|---|---|
| a | 0.21 | 1.63 | 2.18 | 0.008 | 0.001 | 0.03 | 1.66 | 747 | 842 | 766 |
| b | 0.24 | 1.32 | 2.50 | 0.010 | 0.002 | 0.04 | 1.36 | 735 | 818 | 751 |

(continued)

| Steel code | Component composition (mass%), balance being iron and inevitable impurities | | | | | | | Ac$_1$ | Ac$_3$ | 0.8Ac$_1$+0.2Ac$_3$ |
|---|---|---|---|---|---|---|---|---|---|---|
| | C | Si | Mn | P | S | Al | Si+Al | (°C) | (°C) | (°C) |
| c | 0.17 | 1.87 | 1.62 | 0.006 | 0.003 | 0.04 | 1.91 | 760 | 881 | 784 |
| d | 0.33 | 1.08 | 1.98 | 0.007 | 0.002 | 0.03 | 1.11 | 733 | 799 | 746 |
| e | 0.21 | 1.75 | 2.66 | 0.014 | 0.003 | 0.03 | 1.78 | 745 | 837 | 764 |
| f | 0.23 | 1.35 | 1.95 | 0.014 | 0.003 | 0.03 | 1.38 | 741 | 836 | 760 |
| g | 0.22 | 1.15 | 2.24 | 0.010 | 0.001 | 0.03 | 1.18 | 732 | 818 | 750 |
| h | 0.21 | 0.81 | 2.31 | 0.010 | 0.002 | 0.03 | 0.84 | 722 | 803 | 738 |
| i | 0.23 | 2.15 | 2.32 | 0.007 | 0.002 | 0.02 | 2.17 | 761 | 852 | 779 |
| j | 0.22 | 1.72 | 3.53 | 0.005 | 0.003 | 0.04 | 1.76 | 735 | 805 | 749 |
| k | 0.22 | 1.70 | 2.70 | 0.007 | 0.001 | 0.43 | 2.13 | 744 | 987 | 792 |
| l | 0.12 | 1.95 | 1.17 | 0.009 | 0.002 | 0.02 | 1.97 | 767 | 906 | 795 |
| m | 0.48 | 1.07 | 2.02 | 0.009 | 0.002 | 0.02 | 1.09 | 733 | 771 | 740 |
| n | 0.34 | 0.12 | 2.57 | 0.012 | 0.002 | 0.04 | 0.16 | 699 | 744 | 708 |
| o | 0.27 | 3.49 | 1.44 | 0.013 | 0.002 | 0.04 | 3.53 | 809 | 942 | 836 |
| p | 0.18 | 1.84 | 0.77 | 0.007 | 0.003 | 0.03 | 1.87 | 768 | 900 | 795 |
| q | 0.23 | 1.29 | 4.33 | 0.014 | 0.003 | 0.04 | 1.33 | 714 | 766 | 725 |
| r | 0.19 | 1.99 | 2.62 | 0.014 | 0.001 | 0.02 | 2.01 | 753 | 850 | 772 |
| s | 0.29 | 1.58 | 2.07 | 0.008 | 0.003 | 0.04 | 1.62 | 747 | 831 | 764 |
| t | 0.17 | 2.34 | 2.02 | 0.012 | 0.002 | 0.04 | 2.38 | 769 | 895 | 795 |

[Table 2-1]

| No. | Steel code | [1] Heating rate HR1 (°C/s) | [2] Heating temperature T1 (°C) | Retention time t1 (s) | [3] Average cooling rate CR1 (°C/s) | [4] Rapid cooling start temperature T2 (°C) | Average cooling rate CR2 (°C/s) | [5] Rapid cooling stop temperature T3a (°C) | Gradual cooling time t3 (s) | Gradual cooling finish temperature T3b (°C) | [6] Average cooling rate CR3 (°C/s) | [7] Cooling stop temperature T4 (°C) | Retention time t4 (s) | [9] Reheating temperature T5 (°C) | Reheating time t5 (s) | [10] Average cooling rate CR4 (°C/s) |
|---|---|---|---|---|---|---|---|---|---|---|---|---|---|---|---|---|
| 1 | a | 10 | 800 | 120 | 10 | 700 | 40 | 400 | 50 | 350 | 30 | 200 | 50 | 400 | 300 | 10 |
| 2 | a | 10 | 800 | 120 | 5 | 700 | 40 | 440 | 80 | 420 | 30 | 170 | 50 | 400 | 300 | 10 |
| 3 | a | 10 | 850 | 120 | 10 | 700 | 40 | 400 | 50 | 400 | 30 | 200 | 50 | 400 | 300 | 10 |
| 4 | a | 10 | 800 | 120 | 10 | 700 | 40 | 550 | 50 | 500 | 30 | 200 | 50 | 400 | 300 | 10 |
| 5 | a | 10 | 800 | 120 | 10 | 700 | 40 | 400 | 50 | 400 | 30 | 200 | 50 | 250 | 300 | 10 |
| 6 | a | 10 | 800 | 120 | 10 | 700 | 40 | 400 | 50 | 400 | 30 | 50 | 50 | 400 | 300 | 10 |
| 7 | b | 10 | 780 | 120 | 10 | 700 | 40 | 400 | 50 | 400 | 30 | 200 | 50 | 400 | 300 | 10 |
| 8 | b | 10 | 780 | 120 | 10 | 700 | 40 | 400 | 50 | 400 | 30 | 200 | 50 | 550 | 300 | 10 |
| 9 | b | 10 | 800 | 120 | 10 | 700 | 40 | 250 | 50 | 250 | 30 | 200 | 50 | 400 | 300 | 10 |
| 10 | b | 10 | 800 | 120 | 10 | 700 | 40 | 400 | 50 | 350 | 1 | 200 | 50 | 400 | 300 | 10 |
| 11 | c | 10 | 830 | 120 | 10 | 700 | 40 | 400 | 50 | 400 | 30 | 200 | - | 400 | 300 | 10 |
| 12 | d | 10 | 780 | 120 | 10 | 700 | 40 | 400 | 50 | 400 | 30 | 200 | 50 | 400 | 300 | 10 |
| 13 | d | 10 | 760 | 200 | 10 | 700 | 40 | 360 | 50 | 360 | 30 | 170 | 50 | 430 | 300 | 10 |
| 14 | e | 10 | 800 | 120 | 10 | 700 | 40 | 400 | 50 | 400 | 30 | 200 | 50 | 400 | 300 | 10 |
| 15 | f | 10 | 800 | 120 | 10 | 700 | 40 | 400 | 50 | 400 | 30 | 200 | 50 | 400 | 300 | 10 |
| 16 | f | 10 | 800 | 120 | 10 | 700 | 40 | 420 | 70 | 400 | 30 | 230 | 50 | 360 | 300 | 10 |
| 17 | f | 10 | 800 | 120 | 10 | 700 | 40 | 400 | 300 | - | - | - | - | - | - | 10 |
| 18 | f | 10 | 800 | 120 | 10 | 700 | 40 | - | - | - | - | 200 | 50 | 400 | 300 | 10 |
| 19 | f | 10 | 800 | 120 | 10 | 700 | 40 | 400 | 400 | 400 | 30 | 200 | 50 | 400 | 300 | 10 |
| 20 | g | 10 | 800 | 120 | 10 | 700 | 40 | 400 | 50 | 350 | 30 | 200 | 50 | 400 | 300 | 10 |

[Table 2-2]

| No. | Steel code | [1] Heating rate HR1 (°C/s) | [2] Heating temperature T1 (°C) | Retention time t1 (s) | [3] Average cooling rate CR1 (°C/s) | [4] Rapid cooling start temperature T2 (°C) | Average cooling rate CR2 (°C/s) | Rapid cooling stop temperature T3a (°C) | [5] Gradual cooling time t3 (s) | Gradual cooling finish temperature T3b (°C) | [6] Average cooling rate CR3 (°C/s) | [7] Cooling stop temperature T4 (°C) | Retention time t4 (s) | [9] Reheating temperature T5 (°C) | Reheating time t5 (s) | [10] Average cooling rate CR4 (°C/s) |
|---|---|---|---|---|---|---|---|---|---|---|---|---|---|---|---|---|
| 21 | g | 10 | 800 | 120 | 10 | 700 | 40 | 400 | 5 | 400 | 30 | 200 | 50 | 400 | 300 | 10 |
| 22 | g | 10 | 800 | 120 | 10 | 700 | 40 | 400 | 150 | 320 | 30 | 200 | 50 | 400 | 200 | 10 |
| 23 | h | 10 | 780 | 120 | 10 | 700 | 40 | 400 | 50 | 400 | 30 | 200 | 50 | 400 | 300 | 10 |
| 24 | i | 10 | 830 | 120 | 10 | 700 | 40 | 400 | 50 | 400 | 30 | 200 | 50 | 400 | 300 | 10 |
| 25 | i | 10 | 820 | 120 | 10 | 700 | 40 | 370 | 50 | 340 | 30 | 250 | 50 | 420 | 300 | 10 |
| 26 | j | 10 | 780 | 120 | 10 | 700 | 40 | 400 | 50 | 350 | 30 | 200 | 50 | 400 | 300 | 10 |
| 27 | k | 10 | 900 | 120 | 10 | 700 | 40 | 400 | 50 | 350 | 30 | 200 | 50 | 400 | 300 | 10 |
| 28 | l | 10 | 840 | 120 | 10 | 700 | 40 | 400 | 50 | 400 | 30 | 200 | 50 | 400 | 300 | 10 |
| 29 | m | 10 | 750 | 120 | 10 | 700 | 40 | 400 | 50 | 400 | 30 | 200 | 50 | 400 | 300 | 10 |
| 30 | n | 10 | 720 | 120 | 10 | 700 | 40 | 400 | 50 | 400 | 30 | 200 | 50 | 400 | 300 | 10 |
| 31 | o | 10 | 850 | 120 | 10 | 700 | 40 | 400 | 50 | 400 | 30 | 200 | 50 | 400 | 300 | 10 |
| 32 | p | 10 | 800 | 120 | 10 | 700 | 40 | 400 | 50 | 400 | 30 | 200 | 50 | 400 | 300 | 10 |
| 33 | q | 10 | 730 | 120 | 10 | 700 | 40 | 400 | 50 | 400 | 30 | 200 | 50 | 400 | 300 | 10 |
| 34 | r | 10 | 820 | 120 | 10 | 700 | 40 | 480 | 30 | 440 | 30 | 270 | 50 | 420 | 300 | 10 |
| 35 | r | 10 | 800 | 120 | 10 | 700 | 40 | 400 | 50 | 400 | 15 | 230 | 50 | 460 | 300 | 10 |
| 36 | s | 10 | 800 | 120 | 10 | 700 | 40 | 420 | 50 | 400 | 30 | 120 | 50 | 400 | 300 | 10 |
| 37 | s | 10 | 780 | 120 | 10 | 700 | 40 | 330 | 50 | 330 | 30 | 200 | 30 | 420 | 300 | 10 |
| 38 | t | 10 | 830 | 120 | 10 | 700 | 40 | 400 | 50 | 380 | 20 | 200 | 50 | 400 | 300 | 10 |
| 39 | t | 10 | 840 | 120 | 10 | 700 | 40 | 430 | 50 | 430 | 30 | 220 | 20 | 380 | 300 | 10 |
| 40 | t | 10 | 815 | 120 | 20 | 700 | 40 | 360 | 100 | 350 | 30 | 140 | 50 | 420 | 300 | 10 |

2. Evaluation of steel structures

The samples obtained were measured as described below for the steel structure at a position of the sheet thickness t/4.

[Area proportion of ferrite]

The sample was electrolytically polished, then subjected to LePera etching, observed by 3 fields (100 $\mu$m × 100 $\mu$m size/field) with an optical microscope (1000 times), and measured for an area proportion of ferrite by a point arithmetic method with 20 × 20 grating points at a grating space of 5 $\mu$m, and an average value of area proportions of ferrite was calculated. The value derived in the area ratio can be directly used as a value of a volume proportion (volume%).

[Area proportion of total of tempered martensite and bainite]

An area proportion of the total of tempered martensite and bainite was derived by deducting the fraction of ferrite described above and the fraction of the MA derived by a following method, that is, the total of retained austenite and martensite that has been only quenched, from the whole structure.

[Area proportion and average circle equivalent diameter of MA]

The sample was electrolytically polished, then subjected to nital etching, observed by 3 fields (20 $\mu$m × 20 $\mu$m size/field) with an SEM (5000 times), and measured for an average circle equivalent diameter of the MA by drawing 20 straight lines with a length of 10 $\mu$m at arbitrary positions in a photograph, measuring length of segments of the MA that intersect with the straight lines, and calculating an average value of the length of the segments. The area proportion of the MA is calculated on the basis of the average circle equivalent diameter of the MA and the number of MAs observed in a field, and an average of the three fields was derived.

[Volume ratio of retained austenite]

The amount of retained austenite can be obtained by deriving through X-ray diffraction a diffraction intensity ratio between ferrite, bainite, tempered martensite and martensite as body-centered cubic lattices or body-centered tetragonal lattices and austenite as a face-centered cubic lattice and by calculation based on the diffraction intensity ratio. In detail, measurement was as follows. That is, the sample was polished to a position of 1/4 the sheet thickness using #1000 to #1500 sand paper, and then the surface was further electrolytically polished to a depth of about 10 to 20 $\mu$m and measured using a two dimensional micro area X-ray diffractometer (RINT-RAPIDII) manufactured by Rigaku Corporation, as a X-ray diffractometer. Specifically, the measurement was performed using a Co target, using a Co-Ka ray as an X-ray source, at an output of about 40 kV-200 mA, in a 2$\theta$ range from 40° to 130°. Then, retained $\gamma$ was quantitatively measured from obtained diffraction peaks (110), (200) and (211) of the bcc ($\alpha$) and diffraction peaks (111), (200), (220) and (311) of the fcc ($\gamma$).

[Average circle equivalent diameter of retained austenite, and ratio of retained austenite with circle equivalent diameter of 1.5 $\mu$m or more]

The average circle equivalent diameter of retained austenite, and the ratio of the amount of retained austenite with a circle equivalent diameter of 1.5 $\mu$m or more to the amount of the whole retained austenite are derived as described above by preparing a phase map according to an EBSD method which is a crystal analysis with use of an SEM. In detail, a surface of the sample was electrolytically polished, and EBSD measurement (OIM system manufactured by TexSEM Laboratories, Inc.) was performed at a position of 1/4 the sheet thickness by total three regions (100 $\mu$m × 100 $\mu$m size per region) at 180,000 points with one step of 0.25 $\mu$m. From the phase map obtained by this measurement, the area of each austenite phase (retained austenite) was derived, the circle equivalent diameter of each austenite phase was derived from the area, and an average value of circle equivalent diameters was defined as the average circle equivalent diameter of retained austenite.

Integrated area was derived for retained austenite with a circle equivalent diameter of 1.5 $\mu$m or more, and the ratio of the integrated area to the total area of retained austenite phases was derived to obtain the ratio of retained austenite with a circle equivalent diameter of 1.5 $\mu$m or more to the whole retained austenite. The thus-derived ratio of retained austenite with a circle equivalent diameter of 1.5 $\mu$m or more to the whole retained austenite is an area ratio but is equivalent to a volume ratio.

Table 3 shows results of measuring these steel structures. Table 3 indicates ferrite as "F," tempered martensite and bainite as "tempered M/B," retained austenite with a circle equivalent diameter of 1.5 μm or more as "retained γ with 1.5 μm or more."

[Table 3]

| No. | F (area%) | Tempered M/B (area%) | MA (area%) | MA average circle equivalent diameter (μm) | Retained γ (volume%) | Retained γ average circle equivalent diametery (μm) | Amount of retained γ with 1.5 μm or more (volume%) | Ratio of amount of retained γ with 1.5 μm or more (%) |
|---|---|---|---|---|---|---|---|---|
| 1 | 22 | 52 | 26 | 0.58 | 14.1 | 0.83 | 3.3 | 23.1 |
| 2 | 29 | 45 | 26 | 0.55 | 14.0 | 0.80 | 4.0 | 28.2 |
| 3 | 0 | 73 | 27 | 0.60 | 13.6 | 0.85 | 3.6 | 26.3 |
| 4 | 23 | 49 | 28 | 1.54 | 14.4 | 0.79 | 3.8 | 26.3 |
| 5 | 29 | 43 | 28 | 0.55 | 7.0 | 0.85 | 0.9 | 13.0 |
| 6 | 30 | 57 | 13 | 0.30 | 5.1 | 0.59 | 1.0 | 18.6 |
| 7 | 19 | 52 | 29 | 0.43 | 16.2 | 0.80 | 3.0 | 18.5 |
| 8 | 14 | 57 | 29 | 0.65 | 7.0 | 0.84 | 0.6 | 7.9 |
| 9 | 13 | 58 | 29 | 0.60 | 14.4 | 0.84 | 0.6 | 4.2 |
| 10 | 16 | 55 | 29 | 1.20 | 14.4 | 0.80 | 4.5 | 31.5 |
| 11 | 33 | 40 | 27 | 0.45 | 12.0 | 0.82 | 4.7 | 39.1 |
| 12 | 14 | 51 | 35 | 0.55 | 20.5 | 0.77 | 2.9 | 14.3 |
| 13 | 26 | 43 | 31 | 0.50 | 21.1 | 0.79 | 4.4 | 20.9 |
| 14 | 24 | 50 | 26 | 0.50 | 14.3 | 0.86 | 3.8 | 26.9 |
| 15 | 24 | 48 | 28 | 0.50 | 15.3 | 0.86 | 4.0 | 25.9 |
| 16 | 23 | 46 | 31 | 0.48 | 14.8 | 0.87 | 4.5 | 30.7 |
| 17 | 22 | 52 | 26 | 1.18 | 13.9 | 1.65 | 4.6 | 32.8 |
| 18 | 20 | 53 | 27 | 0.55 | 15.8 | 0.80 | 0.7 | 4.2 |
| 19 | 29 | 43 | 29 | 1.50 | 14.5 | 0.77 | 4.3 | 29.3 |
| 20 | 18 | 53 | 29 | 0.63 | 13.6 | 0.83 | 3.9 | 28.9 |
| 21 | 14 | 59 | 27 | 0.50 | 14.2 | 0.86 | 0.5 | 3.5 |
| 22 | 14 | 59 | 27 | 0.63 | 14.8 | 0.82 | 4.6 | 30.9 |
| 23 | 17 | 57 | 26 | 0.53 | 13.7 | 0.84 | 4.7 | 33.9 |
| 24 | 17 | 55 | 28 | 0.65 | 14.4 | 0.81 | 3.6 | 24.8 |
| 25 | 20 | 49 | 31 | 0.55 | 14.7 | 0.86 | 4.0 | 27.4 |
| 26 | 18 | 53 | 29 | 0.58 | 15.2 | 0.79 | 4.3 | 28.0 |
| 27 | 21 | 52 | 27 | 0.50 | 13.8 | 0.84 | 2.9 | 21.2 |
| 28 | 42 | 34 | 24 | 0.63 | 6.2 | 0.81 | 0.8 | 12.9 |
| 29 | 12 | 49 | 39 | 1.26 | 29.8 | 1.18 | 16.4 | 55.0 |
| 30 | 6 | 62 | 32 | 0.53 | 6.2 | 0.82 | 0.9 | 15.0 |
| 31 | 42 | 28 | 30 | 1.12 | 18.1 | 1.32 | 3.5 | 19.1 |
| 32 | 55 | 19 | 26 | 0.48 | 11.3 | 0.77 | 5.3 | 47.0 |

(continued)

| No. | F | Tempered M/B | MA | MA average circle equivalent diameter | Retained $\gamma$ | Retained $\gamma$ average circle equivalent diametery | Amount of retained $\gamma$ with 1.5 $\mu$m or more | Ratio of amount of retained $\gamma$ with 1.5 $\mu$m or more |
|---|---|---|---|---|---|---|---|---|
| | (area%) | (area%) | (area%) | ($\mu$m) | (volume%) | ($\mu$m) | (volume%) | (%) |
| 33 | 16 | 55 | 29 | 0.45 | 15.1 | 0.86 | 0.2 | 1.3 |
| 34 | 18 | 51 | 31 | 0.55 | 13.3 | 0.88 | 3.6 | 27.1 |
| 35 | 33 | 39 | 28 | 0.48 | 12.9 | 0.90 | 4.7 | 36.1 |
| 36 | 17 | 55 | 28 | 0.58 | 18.2 | 0.66 | 3.9 | 21.2 |
| 37 | 33 | 38 | 29 | 0.45 | 18.2 | 0.80 | 4.3 | 23.6 |
| 38 | 38 | 36 | 26 | 0.60 | 11.6 | 0.82 | 3.5 | 30.1 |
| 39 | 31 | 43 | 26 | 0.68 | 11.6 | 0.87 | 3.5 | 30.5 |
| 40 | 45 | 34 | 21 | 0.60 | 11.7 | 0.69 | 3.5 | 29.7 |

3. Evaluation of characteristics

The sample obtained was subjected to a tensile test as indicated below to measure the yield strength YS, the tensile strength TS, and the total elongation EL, and the yield ratio YR and the TS $\times$ EL were calculated. Further, the hole expansion ratio $\lambda$ was measured by a method indicated below and the deep drawability was evaluated.

(Tensile strength)

No. 5 test piece specified in JIS Z2201 was taken from the sample such that a direction perpendicular to the rolling direction is a longitudinal direction. Then, the test piece was subjected to a tensile test with a tensile tester under conditions of JIS Z2241 to derive the YS, the TS, the YR, the EL and the TS $\times$ EL. Then, a test piece having the TS of 780 MPa or more, the YR of 0.60 or more, and the TS $\times$ EL of 22000 MPa% or more was evaluated as having high strength, a high yield ratio, and excellent strength-ductility balance.

(Measurement of hole expansion ratio)

The hole expansion ratio $\lambda$ was derived according to The Japan Iron and Steel Federation Standard JFS T1001. In detail, a test piece was punched to form a punched hole with a diameter do ($d_0$ = 10 mm), a punch with a tip angle of 60° was pushed into the punched hole, a diameter d of the punched hole was measured when a generated crack penetrated through the sheet thickness of the test piece, and the hole expansion ratio was derived from a following formula. Then, a test piece having a hole expansion ratio $\lambda$ of 20% or more was evaluated as having excellent processability such as press formability.

$$\lambda(\%) = \{(d\text{-}d_0)/d_0\} \times 100$$

(Evaluation of deep drawability)

The deep drawability was evaluated by the LDR. The LDR is derived as follows. That is, d is defined as a diameter of a cylinder obtained by cylinder drawing, and D is defined as a maximum diameter of a disk-shaped steel sheet (blank) capable of giving a cylinder without fracture in one time of deep drawing. Then, the LDR is derived from d/D. In the present examples, disk-shaped specimens with a sheet thickness of 1.4 mm and various diameters were subjected to cylinder deep drawing with a die having a punch diameter of 50 mm, a punch angle radius of 6 mm, a die diameter of 55.2 mm, and a die angle radius of 8 mm, the diameter (maximum diameter D) of a specimen that had been drawn without fracture was measured, and the d/D was derived and defined as the LDR. A specimen having an LDR of 2.05 or more was evaluated as having excellent deep drawability.

Table 4 shows these results.

[Table 4]

| No. | YS (MPa) | TS (MPa) | YR | EL (%) | TS×EL (MPa%) | λ (%) | Deep drawability LDR |
|---|---|---|---|---|---|---|---|
| 1 | 682 | 1063 | 0.64 | 21.9 | 23280 | 42 | 2.09 |
| 2 | 615 | 996 | 0.62 | 24.2 | 24103 | 36 | 2.11 |
| 3 | 963 | 1167 | 0.83 | 17.6 | 20539 | 30 | 2.09 |
| 4 | 700 | 1074 | 0.65 | 22.1 | 23735 | 15 | 2.11 |
| 5 | 832 | 1344 | 0.62 | 14.2 | 19085 | 26 | 2.02 |
| 6 | 518 | 843 | 0.61 | 21.0 | 17703 | 44 | 1.94 |
| 7 | 735 | 1121 | 0.66 | 21.5 | 24102 | 31 | 2.09 |
| 8 | 591 | 865 | 0.68 | 20.2 | 17473 | 22 | 2.01 |
| 9 | 809 | 1173 | 0.69 | 19.1 | 22404 | 26 | 1.90 |
| 10 | 761 | 1129 | 0.67 | 20.4 | 23032 | 18 | 2.14 |
| 11 | 604 | 990 | 0.61 | 22.9 | 22671 | 24 | 2.13 |
| 12 | 829 | 1206 | 0.69 | 22.2 | 26773 | 25 | 2.07 |
| 13 | 655 | 1031 | 0.64 | 27.8 | 28662 | 22 | 2.13 |
| 14 | 698 | 1072 | 0.65 | 21.8 | 23370 | 35 | 2.12 |
| 15 | 690 | 1065 | 0.65 | 22.9 | 24389 | 32 | 2.13 |
| 16 | 771 | 1211 | 0.64 | 19.8 | 23978 | 27 | 2.15 |
| 17 | 1185 | 1820 | 0.65 | 12.6 | 22932 | 16 | 2.15 |
| 18 | 719 | 1096 | 0.66 | 22.2 | 24331 | 38 | 1.86 |
| 19 | 652 | 1062 | 0.61 | 22.6 | 24001 | 16 | 2.10 |
| 20 | 728 | 1095 | 0.66 | 20.6 | 22557 | 28 | 2.10 |
| 21 | 777 | 1130 | 0.69 | 19.9 | 22487 | 41 | 1.80 |
| 22 | 782 | 1139 | 0.69 | 20.1 | 22894 | 22 | 2.11 |
| 23 | 751 | 1105 | 0.68 | 20.2 | 22321 | 28 | 2.14 |
| 24 | 717 | 1076 | 0.67 | 21.4 | 23026 | 30 | 2.08 |
| 25 | 737 | 1123 | 0.66 | 20.6 | 23134 | 42 | 2.11 |
| 26 | 764 | 1141 | 0.67 | 20.6 | 23505 | 38 | 2.10 |
| 27 | 727 | 1114 | 0.65 | 20.5 | 22837 | 31 | 2.08 |
| 28 | 507 | 929 | 0.55 | 21.0 | 19509 | 43 | 2.07 |
| 29 | 883 | 1274 | 0.69 | 26.0 | 33124 | 18 | 1.99 |
| 30 | 885 | 1228 | 0.72 | 13.1 | 16087 | 30 | 2.06 |
| 31 | 582 | 1034 | 0.56 | 26.9 | 27815 | 19 | 2.16 |
| 32 | 378 | 732 | 0.52 | 33.2 | 24302 | 24 | 2.08 |
| 33 | 766 | 1141 | 0.67 | 20.5 | 23391 | 38 | 1.83 |
| 34 | 746 | 1115 | 0.67 | 20.0 | 22300 | 32 | 2.11 |
| 35 | 557 | 895 | 0.62 | 26.0 | 23270 | 36 | 2.13 |
| 36 | 740 | 1097 | 0.67 | 23.3 | 25560 | 27 | 2.11 |
| 37 | 607 | 991 | 0.61 | 27.4 | 27153 | 32 | 2.13 |

(continued)

| No. | YS (MPa) | TS (MPa) | YR | EL (%) | TS×EL (MPa%) | λ (%) | Deep drawability LDR |
|---|---|---|---|---|---|---|---|
| 38 | 625 | 992 | 0.63 | 23.3 | 23114 | 28 | 2.11 |
| 39 | 653 | 1076 | 0.61 | 20.7 | 22273 | 35 | 2.11 |
| 40 | 508 | 841 | 0.60 | 28.0 | 23548 | 26 | 2.09 |

From Tables 1 to 4, following things are understood. Any of Nos. 1, 2, 7, 11 to 16, 20, 22 to 27 and 34 to 40 have the component composition defined in the embodiments of the present invention and was produced under the defined conditions to obtain the desired steel structure, so that these exhibit not only high tensile strength and excellent deep drawability but also excellent strength-ductility balance, a high yield ratio, and excellent hole expandability, i.e., a high hole expansion ratio. The examples other than described above, however, did not satisfy either the defined component composition or the defined manufacturing conditions to obtain no desired steel structures, as a result, at least any one of the characteristics was inferior. Details are as follows.

No. 3 was manufactured by the condition of an excessively high heating temperature T1 to be unable to secure ferrite, and thus TS × EL was decreased.

No. 4 was manufactured by the condition of an excessively high rapid cooling stop temperature, i.e., an excessively high gradual cooling start temperature T3a to give a coarse MA. This resulted in a decrease of the hole expandability.

No. 5 was manufactured by the condition of an excessively low reheating temperature T5 to be unable to secure a certain amount or more of retained austenite and thus the TS × EL and the deep drawability were decreased.

No. 6 was manufactured by the condition of an excessively low cooling stop temperature T4 after the cooling at the average cooling rate CR3 to be unable to secure a certain amount or more of retained austenite, and thus the TS × EL and the deep drawability were decreased.

No. 8 was manufactured by the condition of an excessively high reheating temperature T5 to be unable to secure a certain amount or more of retained austenite, and thus the TS × EL and the deep drawability were decreased.

No. 9 was manufactured by the condition of excessively low temperatures T3a and T3b for the gradual cooling, to be unable to secure retained austenite with a circle equivalent diameter of 1.5 μm or more, and thus the deep drawability was decreased.

No. 10 was manufactured by the condition of an excessively low average cooling rate CR3 after the gradual cooling to the cooling stop temperature T4 of 100 to 300°C to coarsen the MA, and thus the hole expandability was decreased.

No. 17 is an example of retaining at 400°C for 300 seconds after the rapid cooling illustrated by [4] in Fig. 1 and cooling to room temperature, without performing [6] to [9] in Fig. 1. In the case of this example, the cooling at the average cooling rate CR3 and the reheating were not performed to cause no martensite transformation, and the MA and retained austenite were coarsened. This resulted in a decrease of the hole expandability. No. 17, however, had a remarkably different structure from the structures defined in the embodiments of the present invention, so that retained austenite had a coarse average circle equivalent diameter but the deep drawability was secured.

No. 18 is an example of rapidly cooling the original sheet from a rapid cooling start temperature of 700°C to a stop temperature of 200°C at an average cooling rate of 40°C without a holding step illustrated by [5] in Fig. 1. In this case, it was impossible to secure retained austenite with a circle equivalent diameter of 1.5 μm or more, so that the deep drawability was decreased.

No. 19 was manufactured by the condition of a long gradual cooling time t3 to coarsen the MA, and thus the hole expandability was decreased.

No. 21 was manufactured by the condition of a short gradual cooling time t3 to be short of the amount of retained austenite with a circle equivalent diameter of 1.5 μm or more, and thus the deep drawability was decreased.

No. 28 had an excessively small amount of C to be short of the amount of retained austenite, and thus the TS × EL was especially decreased.

No. 29 had an excessive amount of C to coarsen the MA and retained austenite, and thus both the deep drawability and the hole expandability were decreased.

No. 30 was short of the amount of Si + Al to be short of the amount of retained austenite, and thus the TS × EL was decreased.

No. 31 had an excessive amount of Si + Al to be short of tempered martensite/bainite, and the MA and retained austenite were coarsened. This resulted in a low yield ratio and a decrease of the hole expandability. No. 31, however, had a remarkably different structure from the structures defined in the embodiments of the present invention, so that retained austenite had a coarse average circle equivalent diameter but the deep drawability was secured.

No. 32 is an example of obtaining no sufficient tempered martensite and bainite because the amount of Mn was short to excessively increase ferrite. This resulted in a decrease of the TS and the YR.

No. 33 had an excessive amount of the Mn to be short of the amount of retained austenite with a circle equivalent diameter of 1.5 μm or more, and thus the deep drawability was decreased. The present application claims priority to Japanese Patent Application No. 2016-072740 filed on March 31, 2016 and Japanese Patent Application No. 2016-253902 filed on December 27, 2016.

**Claims**

1. A high-strength steel sheet comprising, as component composition, by mass:

C: 0.15 to 0.35%;
total of Si and Al: 0.5 to 2.5%;
Mn: 1.0 to 4.0%;
P: more than 0% and 0.05% or less;
S: more than 0% and 0.01% or less; and optionally
at least any one of following (a) to (c):

(a) at least one selected from the group consisting of Cu, Ni, Mo, Cr and B in a total amount of more than 0% and 1.0% or less;
(b) at least one selected from the group consisting of V, Nb, Ti, Zr and Hf in a total amount of more than 0% and 0.2% or less; and
(c) at least one selected from the group consisting of Ca, Mg and REM in a total amount of more than 0% and 0.01% or less, with the balance being Fe and inevitable impurities, wherein

a steel structure satisfies, in ratio with respect to the whole structure:

ferrite: more than 5 area% and 50 area% or less;
total of tempered martensite and bainite: 30 area% or more; and
retained austenite: 10 volume% or more, the steel structure further includes martensite-austenite constituent and the steel structure satisfies:

an average circle equivalent diameter of the martensite-austenite constituent 1.0 μm or less;
an average circle equivalent diameter of the retained austenite: 1.0 μm or less; all the microstructure features are measured according to the method described in the description; and
a volume ratio of retained austenite with a circle equivalent diameter of 1.5 μm or more to the whole retained austenite: 5% or more.

2. The high-strength steel sheet according to claim 1, wherein the amount of C in the component composition is 0.30% or less.

3. The high-strength steel sheet according to claim 1, wherein the amount of Al in the component composition is less than 0.10%.

4. A method for manufacturing the high-strength steel sheet according to any one of claims 1 to 3, the method comprising steps A to E in this order:

the step A of heating to a temperature T1 of ($Ac_1$ point × 0.8 + $Ac_3$ point × 0.2) or higher and lower than $Ac_3$ point, using an original sheet satisfying the component composition according to any one of claims 1 to 3;
the step B of rapidly cooling after the heating, from a rapid cooling start temperature T2 of 650°C or higher to a cooling stop temperature T3a of 300 to 500°C at an average cooling rate of 30°C/s or more and less than 200°C/s;
the step C of performing gradual cooling after the rapid cooling, in a temperature range from 300 to 500°C at an average cooling rate of 0°C/s or more and 10°C/s or less for 10 seconds or more and less than 300 seconds;
the step D of cooling after the gradual cooling, from a gradual cooling finish temperature T3b of 300°C or higher to a cooling stop temperature T4 of 100 to 300°C at an average cooling rate of more than 10°C/s; and
the step E of reheating to a reheating temperature T5 of 300 to 500°C.

**5.** The manufacturing method according to claim 4, wherein the step C includes retaining at constant temperature in the temperature range from 300 to 500°C.

**Patentansprüche**

**1.** Hochfestes Stahlblech, umfassend, als Bestandteil-Zusammensetzung, nach Masse:

C: 0,15 bis 0,35%;
Summe von Si und Al: 0,5 bis 2,5%;
Mn: 1,0 bis 4,0%;
P: mehr als 0% und 0,05% oder weniger;
S: mehr als 0% und 0,01% oder weniger; und gegebenenfalls mindestens eines der folgenden (a) bis (c):

(a) mindestens eines, ausgewählt aus der Gruppe, bestehend aus Cu, Ni, Mo, Cr und B in einer Gesamtmenge von mehr als 0% und 1,0% oder weniger;
(b) mindestens eines, ausgewählt aus der Gruppe, bestehend aus V, Nb, Ti, Zr und Hf in einer Gesamtmenge von mehr als 0% und 0,2% oder weniger; und
(c) mindestens eines, ausgewählt aus der Gruppe, bestehend aus Ca, Mg und REM, in einer Gesamtmenge von mehr als 0% und 0,01% oder weniger, wobei der Rest Fe und unvermeidbare Verunreinigungen ist, wobei

eine Stahlstruktur im Verhältnis mit Bezug auf die Gesamtstruktur erfüllt:

Ferrit: mehr als 5 Flächen-% und 50 Flächen-% oder weniger;
Summe aus getempertem Martensit und Bainit: 30 Flächen-% oder mehr; und
Restaustenit: 10 Volumen-% oder mehr,
wobei die Stahlstruktur weiter einen Martensit-Austenit-Bestandteil beinhaltet und
wobei die Stahlstruktur erfüllt:

einen durchschnittlichen Kreisäquivalentdurchmesser des Martensit-Austenit-Bestandteils: 1,0 $\mu$m oder weniger;
einen durchschnittlichen Kreisäquivalentdurchmesser des Restaustenits: 1,0 $\mu$m oder weniger; wobei alle Mikrostrukturmerkmale nach dem in der Beschreibung angegebenen Verfahren gemessen werden; und
ein Volumenverhältnis von Restaustenit mit einem Kreisäquivalentdurchmesser von 1,5 $\mu$m oder mehr zu dem gesamten Restaustenit: 5% oder mehr.

**2.** Hochfestes Stahlblech nach Anspruch 1, wobei die Menge an C in der Bestandteil-Zusammensetzung 0,30% oder weniger beträgt.

**3.** Hochfestes Stahlblech nach Anspruch 1, wobei die Menge an Al in der Bestandteil-Zusammensetzung weniger als 0,10% beträgt.

**4.** Verfahren zur Herstellung des hochfesten Stahlblechs nach einem der Ansprüche 1 bis 3, wobei das Verfahren die Schritte A bis E in dieser Reihenfolge umfasst:

den Schritt A des Erwärmens auf eine Temperatur T1 von ($Ac_1$-Punkt x 0,8 + $Ac_3$-Punkt x 0,2) oder höher und niedriger als der $Ac_3$-Punkt, unter Verwendung eines Ursprungsblechs, das die Bestandteil-Zusammensetzung nach einem der Ansprüche 1 bis 3 erfüllt;
den Schritt B des schnellen Abkühlens nach dem Erwärmen von einer Schnellkühlstarttemperatur T2 von 650°C oder höher auf eine Kühlstopptemperatur T3a von 300 bis 500°C bei einer durchschnittlichen Abkühlgeschwindigkeit von 30°C/s oder mehr und weniger als 200°C/s;
den Schritt C des Durchführens eines schrittweisen Abkühlens nach dem schnellen Abkühlen in einem Temperaturbereich von 300 bis 500°C bei einer durchschnittlichen Abkühlgeschwindigkeit von 0°C/s oder mehr und 10°C/s oder weniger für 10 Sekunden oder mehr und weniger als 300 Sekunden;
den Schritt D des Abkühlens nach dem schrittweisen Abkühlen, von einer Endtemperatur des schrittweisen Abkühlens T3b von 300°C oder höher auf eine Kühlstopptemperatur T4 von 100 bis 300°C bei einer durchschnittlichen Abkühlgeschwindigkeit von mehr als 10°C/s; und

20

den Schritt E des Wiedererwärmens auf eine Wiedererwärmungstemperatur T5 von 300 bis 500°C.

5. Herstellungsverfahren nach Anspruch 4, wobei der Schritt C das Halten bei konstanter Temperatur in dem Temperaturbereich von 300 bis 500°C umfasst.

## Revendications

1. Tôle en acier à haute résistance comprenant: comme composition des composants, en masse:

du C: de 0,15 à 0,35%;
total de Si et d'Al: de 0,5 à 2,5%;
du Mn: de 1,0 à 4,0%;
du P: plus de 0% et 0,05% ou moins;
du S: plus de 0% et 0,01% ou moins; et éventuellement
au moins l'un quelconque des suivants (a) à (c):

(a) au moins l'un sélectionné parmi le groupe consistant en Cu, Ni, Mo, Cr et B dans une quantité totale de plus de 0% et de 1,0% ou moins;
(b) au moins l'un sélectionné parmi le groupe consistant en V, Nb, Ti, Zr et Hf dans une quantité totale de plus de 0% et de 0,2% ou moins; et
(c) au moins l'un sélectionné parmi le groupe consistant en Ca, Mg et les métaux terre rare dans une quantité totale de plus de 0% et de 0,01% ou moins, le restant étant du Fe et des impuretés inévitables, dans laquelle

la structure en acier satisfait, en rapport sur base de la structure totale, à:

ferrite: plus de 5% en surface et 50% en surface ou moins;
total de bainite et de martensite revenues: 30% en surface ou plus; et
austénite de trempe: 10% en volume ou plus,
la structure en acier comprend en outre un constituant de martensite-austénite et
la structure en acier satisfait à:

un diamètre moyen de cercle équivalent du constituant martensite-austénite: 1,0 $\mu$m ou moins;
un diamètre moyen de cercle équivalent de l'austénite de trempe: 1,0 $\mu$m ou moins; toutes les figures de microstructure sont mesurées selon la méthode décrite dans la description; et
un rapport volumique de l'austénite de trempe avec un diamètre d'équivalent de cercle de 1,5 $\mu$m ou plus à la totalité de l'austénite de trempe: 5% ou plus.

2. Tôle en acier à haute résistance selon la revendication 1, dans laquelle la quantité de C dans la composition des composants est de 0,30% ou moins.

3. Tôle en acier à haute résistance selon la revendication 1, dans laquelle la quantité d'Al dans la composition des composants est inférieure à 0,10%.

4. Procédé de fabrication de la tôle en acier à haute résistance selon l'une quelconque des revendications 1 à 3, le procédé comprenant les étapes A à E dans cet ordre:

l'étape A où l'on chauffe à une température T1 de (point Ac$_1$ x 0,8 + point Ac$_3$ x 0,2) ou plus et inférieure au point Ac$_3$ en utilisant une tôle d'origine satisfaisant à la composition des composants selon l'une quelconque des revendications 1 à 3;
l'étape B où l'on refroidit rapidement après le chauffage, partant d'une température initiale de refroidissement rapide T2 de 650°C ou plus à une température d'arrêt du refroidissement T3a allant de 300 à 500°C à une vitesse de refroidissement moyenne de 30°C/s ou plus et inférieure à 200°C/s;
l'étape C où l'on réalise un refroidissement progressif après le refroidissement rapide, dans une plage de température allant de 300 à 500°C à une vitesse moyenne de refroidissement de 0°C/s ou plus et 10°C/s ou moins pendant 10 secondes ou plus et inférieure à 300 secondes;
l'étape D où l'on refroidit après refroidissement progressif, d'une température de finissage de refroidissement progressif T3b de 300°C ou plus à une température d'arrêt du refroidissement T4 allant de 100 à 300°C à une vitesse de refroidissement moyenne de plus de 10°C/s; et

l'étape E où l'on réchauffe à une température de réchauffe T5 allant de 300 à 500°C.

**5.** Procédé de fabrication selon la revendication 4, dans lequel l'étape C comprend la retenue à température constante dans la plage de température allant de 300 à 500°C.

# Fig.1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009203548 A
- US 2012312433 A
- JP 2016072740 A
- JP 2016253902 A

**Non-patent literature cited in the description**

- **LESLIE.** The Physical Metallurgy of Steels. aruzen Co., Ltd, 31 May 1985, 273